## Europäisches Patentamt
## European Patent Office
## Office européen des brevets

(19)

(11) Numéro de publication: **0 023 351**
**B1**

(12) **FASCICULE DE BREVET EUROPEEN**

(45) Date de publication du fascicule du brevet: 17.08.83

(51) Int. Cl.³: **B 23 Q 3/155**

(21) Numéro de dépôt: **80104380.3**

(22) Date de dépôt: **25.07.80**

(54) Machine-outil à changement d'outil automatique.

(30) Priorité: 31.07.79 FR 7919710

(43) Date de publication de la demande: 04.02.81 Bulletin 81/5

(45) Mention de la délivrance du brevet: 17.08.83 Bulletin 83/33

(84) Etats contractants désignés: AT BE CH DE GB IT LI LU NL SE

(56) Documents cités:
CH-A-482 496
DE-A-2 455 402
DE-A-2 743 462
US-A-3 186 085
MACHINE AND TOOLING, vol. 40, 1969, no. 4, Production Engineering Research Association of Great Britain, Melton Mowbray, Leicestershire, GB, YU. D. VRAGOV »Operational Classification of Machine Tools«, page 4—7

(73) Titulaire: REGIE NATIONALE DES USINES RENAULT, Boîte postale 103 8-10 avenue Emile Zola, F-92109 Boulogne-Billancourt (FR)

(72) Inventeur: Pihery, Jean-René, Appartement 393 Tour Juillet Les Hautes Bergères, F-91440 Les Ulis-Bures-sur-Yvette (FR)
Inventeur: Sanguiol, Jean-Pierre, 13 Rue de la Roseraie, F-92360 Meudon-la-Forêt (FR)
Inventeur: Turlet, Michel, 21 Rue de Nemours, F-75011 Paris (FR)

(74) Mandataire: Casalonga, Axel et al, BUREAU D.A. CASALONGA OFFICE JOSSE & PETIT Baaderstrasse 12-14, D-8000 München 5 (DE)

## Machine-outil à changement d'outil automatique

La présente invention se rapporte à une machine-outil à changement d'outil automatique, notamment à une aléseuse-dresseuse à commande numérique, comprenant un plateau rotatif et un chariot qui est déplaçable radialement sur ledit plateau, ledit chariot étant muni d'une glissière s'étendant dans la direction de déplacement du chariot sur le plateau pour recevoir une semelle porte-outil ayant un profil correspondant à celui de ladite glissière, ainsi que de moyens de bridage et de débridage de la semelle porte-outil sur le chariot.

Une aléseuse-dresseuse présentant cette structure générale est connue par la demande DE-A-2 455 402. Sur cette machine connue, la semelle porte-outil est immobilisée dans la glissière du chariot par des coulisseaux bloqués dans la glissière de part et d'autre de la semelle.

Le changement d'outil implique le déblocage du ou des coulisseaux se trouvant d'un côté de la semelle, ce qui nécessite l'intervention d'un opérateur. Par ailleurs, il n'est pas prévu de changeur associé à l'aléseuse-dresseuse et contenant plusieurs outils. Ce document ne suggère donc pas un changement d'outil automatique sur une machine outil telle qu'une aléseuse-dresseuse.

Des dispositifs pour le changement d'outil automatique sont connus pour d'autres machines-outils telles que des tours, comprenant un outil qui n'est pas entraîné en rotation pendant l'usinage. C'est la raison pour laquelle ces changeurs d'outils connus et en particulier les moyens intervenant dans le mouvement de transfert des outils entre le changeur et la machine-outil, dans le bridage et le débridage de l'outil sur la machine-outil et dans la commande de bridage et de débridage ne peuvent pas être utilisés pour un changement d'outil et notamment un changement d'outil automatique sur une machine-outil telle qu'une aléseuse-dresseuse du type défini ci-dessus.

Selon l'invention, la machine-outil à changement d'outil automatique du type défini ci-dessus comprend un changeur d'outil installé à poste fixe à côté de la machine outil et pourvu d'un tambour rotatif indexable dont l'axe de rotation est perpendiculaire à l'axe de rotation du plateau: Le tambour du changeur d'outil comporte plusieurs glissières de même profil que la glissière du chariot, s'étendant parallèlement à l'axe de rotation du tambour et réparties sur le pourtour de ce dernier pour recevoir plusieurs semelles porte-outil. Ce changeur d'outil est en outre pourvu de moyens montés sur le changeur d'outil de manière à ne pas participer au mouvement de rotation du tambour et à pouvoir effectuer, par rapport à ce dernier, un mouvement de coulissement parallèlement à l'axe de rotation du tambour, pour le transfert des semelles porte-outil du chariot du plateau au tambour, et inversement, par coulissement des semelles porte-outil entre le chariot du plateau et le tambour, et inversement, ainsi que pour la commande de bridage et de débridage des semelles porte-outil sur le chariot du plateau.

Ce transfert et cette commande de bridage et de débridage sont effectuées lorsque le plateau est arrêté dans une position dans laquelle la direction de déplacement de son chariot coincide avec la direction de coulissement desdits moyens de transfert et de commande de bridage et de débridage et lorsque le tambour a été amené dans une position dans laquelle l'une de ses glissières, destinée à recevoir la semelle porte-outil du chariot du plateau ou contenant la semelle porte-outil destinée à être montée sur le chariot, coincide avec la direction de déplacement desdits moyens de transfert et de commande de bridage et de débridage et avec ladite glissière du chariot pour recevoir un porte-outil.

Grâce à cet agencement réciproque du plateau rotatif de la machine-outil et du changeur d'outil, le transfert d'un porte-outil du tambour du changeur d'outil au chariot du plateau et inversement peut se faire par un simple mouvement de coulissement du porte-outil qui peut être glissé à la manière d'un tiroir du chariot du plateau sur le tambour et inversement. Ce transfert ainsi que le bridage ou débridage du porte-outil sur le chariot sont assurés par le changeur d'outil, l'ensemble des opérations se déroulant automatiquement sous l'effet de la commande numérique de la machine. Le changeur d'outil est installé à poste fixe, tandis que le plateau dont l'axe de rotation est de préférence horizontal peut, selon les besoins, être doté d'un déplacement monoaxial (suivant son axe de rotation), biaxial (suivant son axe de rotation et suivant un axe horizontal ou vertical perpendiculaire à son axe de rotation) ou triaxial (suivant son axe de rotation et suivant deux axes, l'un horizontal et l'autre vertical, perpendiculaire à son axe de rotation).

D'autres caractéristiques et avantages de l'invention apparaîtront à la lecture de la description, donnée ci-après, d'un mode de réalisation illustratif et non limitatif d'une aléseuse-dresseuse à changement d'outil conforme à l'invention, représentée sur le dessin annexé, sur lequel:

la fig. 1 est une vue en élévation du plateau d'une aléseuse-dresseuse et du changeur d'outil associé, en position de changement d'outil;

la fig. 2 est une vue en élévation prise dans le sens de la flèche II sur la fig. 1, le plateau de l'aléseuse-dresseuse étant décalé suivant son axe de rotation par rapport à la position de changement d'outil;

la fig. 3 est une coupe du chariot, à plus grande échelle, suivant III-III de la fig. 2, montrant les moyens de bridage du porte-outil sur le chariot;

la fig. 4 est une coupe perpendiculaire à celle de la fig. 3, montrant un des éléments de bridage et son moyen de commande.

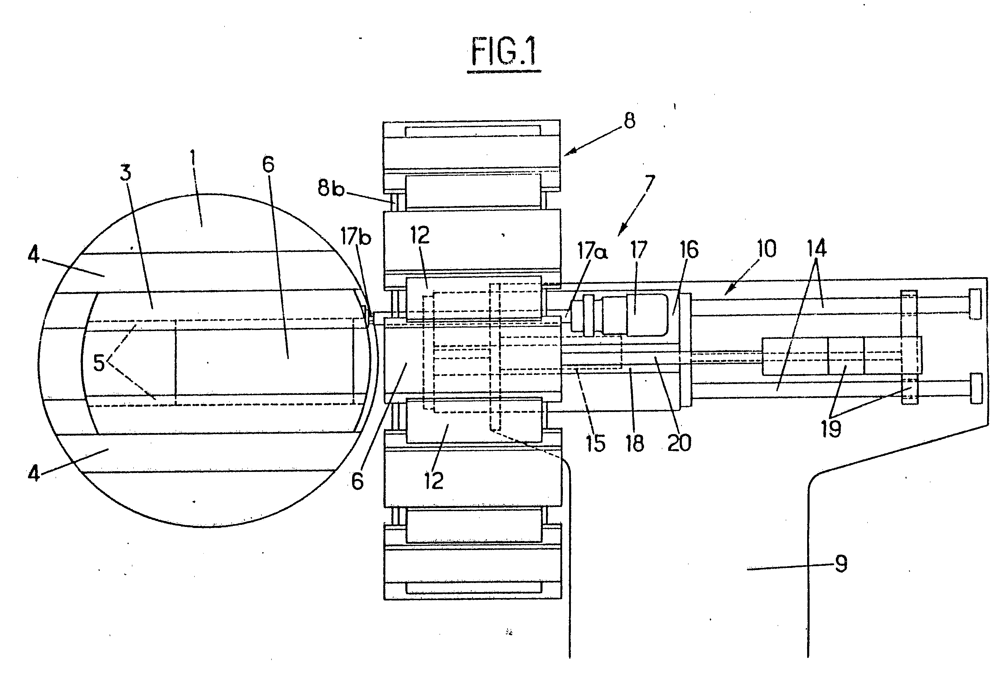

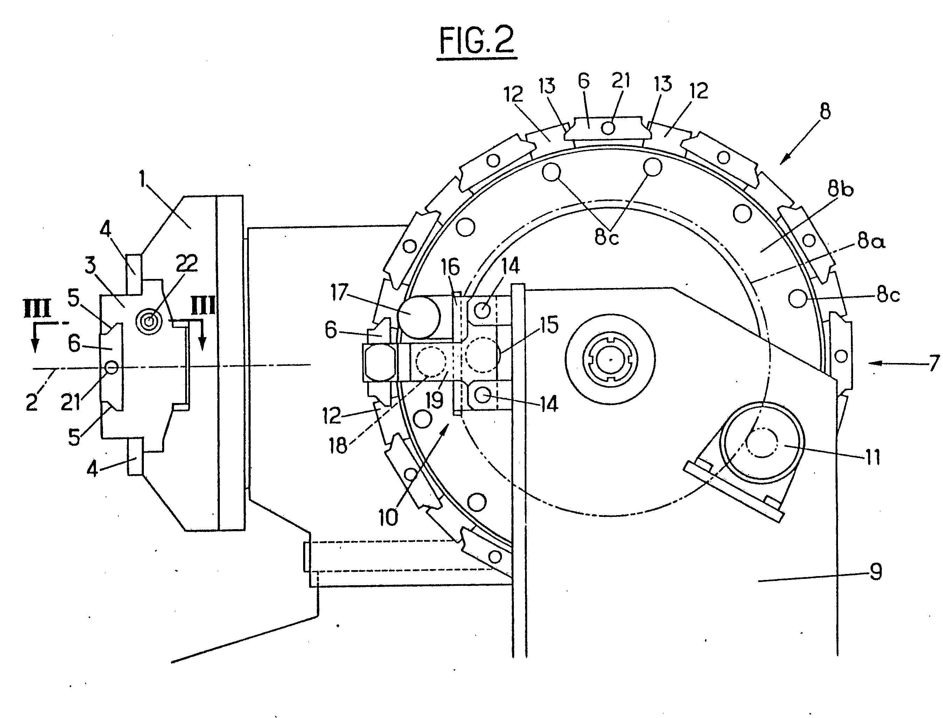

Sur les fig. 1 et 2, on a représenté uniquement le plateau rotatif 1 d'une aléseuse-dresseuse tournant autour d'un axe de rotation horizontal 2. Un chariot 3 coulissant dans une glissière 4 est déplaçable radialement sur le plateau 1, sous l'action d'une commande non représentée. Le chariot 3 présente à son tour une glissière en queue d'aronde 5 dans laquelle une semelle porte-outil 6 prismatique, ayant un profil en queue d'aronde correspondant à celui de la glissière 5, est monté mobile en translation dans la direction de déplacement du chariot 3 sur le plateau 1. L'outil porté par la semelle 6 n'est pas représenté.

Le plateau 1 lui-même peut être animé non seulement d'un mouvement de rotation, mais également, par exemple, d'un déplacement suivant son axe de rotation 2, d'un déplacement horizontal perpendiculaire à son axe de rotation 2 et d'un déplacement vertical perpendiculaire à son axe de rotation 2. Les moyens de guidage et de commande pour permettre au plateau 1 d'effectuer ces mouvements n'entrent pas dans le cadre de la présente invention et ne sont pas représentés.

Un changeur d'outil portant dans son ensemble la référence 7 est installé à poste fixe à côté de l'aléseuse-dresseuse. Ce changeur d'outil comprend un tambour indexable 8 monté en rotation autour d'un axe horizontal, perpendiculaire à l'axe de rotation 2 du plateau 1, sur un support fixe 9, ainsi qu'un dispositif de commande de bridage et de débridage et de transfert 10 monté sur le support 9 de manière à ne pas participer à la rotation du tambour 8.

Le tambour 8 dont le moteur d'entraînement 11 visible sur la fig. 2 attaque une denture intérieure 8a d'une jante 8b du tambour 8 porte, à intervalles réguliers sur son pourtour, des blocs 12. Chaque bloc 12 présente deux rainures opposées 13 de profil tel que les deux rainures 13, en regard l'une de l'autre, de deux blocs 12 voisins définissent une glissière en queue d'aronde pour une semelle porte-outil. Les semelles 6 sont donc montées sur le tambour 1 de manière à pouvoir coulisser parallèlement à l'axe de rotation du tambour 8.

Le dispositif de commande de bridage et de débridage et de transfert 10 est installé sur le support 9 d'un côté de l'axe de rotation du tambour 8, dans la position dans laquelle une semelle 6 sur le tambour 8 occupent la même position que sur le plateau 1. Le dispositif 10 comprend deux tiges de guidage horizontales 14 fixées au support 9. Sur les deux tiges 14 coulisse, sous l'action d'un vérin 15, un chariot 16. Ce chariot 16 porte une visseuse 17 dont l'arbre de sortie 17a s'étend en direction du plateau 1 et porte à son extrémité libre un six pans 17b. Un vérin 18 également monté sur le chariot 16 commande en translation un second chariot 19 coulissant sur les tiges 14, sur lequel est monté une tige de transfert 20 s'étendant également en direction du plateau 1.

Chaque semelle porte-outil 6 présente à une extrémité, au milieu de sa largeur, une ouverture 21 qui constitue l'orifice d'un trou borgne chambré. Une tête expansible de type connu, susceptible de coopérer avec ledit trou borgne chambré, est disposée à l'extrémité libre de la tige de transfert 20. La tige de transfert 20 est disposée de manière que lorsque le plateau 1 et le tambour 8 se trouvent en position de changement d'outil, la tige de transfert 20 soit alignée avec l'ouverture 21 de la semelle 6 portée par le chariot 3 ou de la semelle 6 en position de changement d'outil du tambour 8.

De son côté, l'arbre de sortie 17a de la visseuse 17 se trouve dans une position telle que lorsque le plateau 1 et le tambour 8 se trouvent en position de changement, l'arbre 17a soit aligné avec un écrou 22 monté sur le chariot 3 et avec l'un des trous 8c ménagés dans la jante 8b du tambour 8 en dessous des blocs 12.

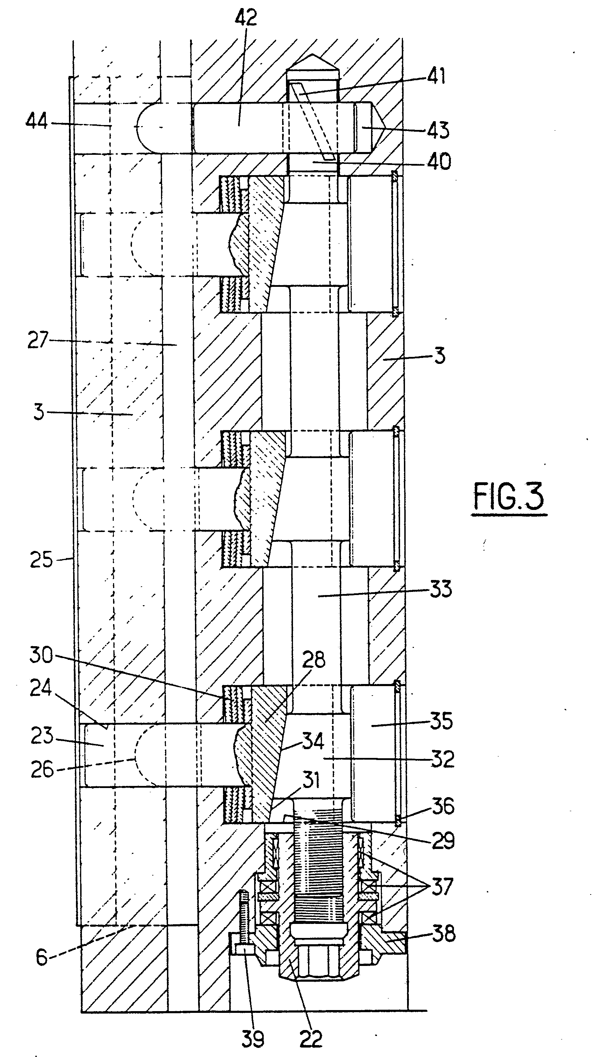

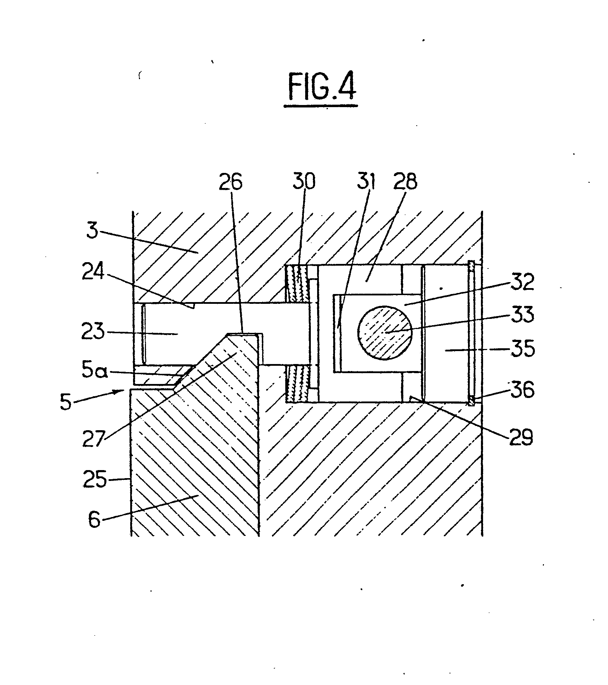

Les fig. 3 et 4 représentent les moyens de bridage de la semelle porte-outil 6 sur le chariot 3 du plateau 1.

Sur la fig. 4, on reconnaît une moitié d'une semelle porte-outil 6 et la partie correspondante du chariot 3 avec une moitié de la glissière en queue d'aronde 5, définie par une rainure trapézoïdale 5a du chariot 3. Plusieurs tiges 23 sont montées coulissantes dans des perçages 24 du chariot 3, répartis le long de la glissière 5 de manière que leurs axes qui sont perpendiculaires à la face extérieure 25 de la semelle 6 soient contenus dans un plan confondu avec le flanc extérieur ou fond de la rainure 5a définissant la moitié de la glissière 5. Chaque tige 23 comporte une échancrure latérale 26 dont la forme est adaptée à la forme trapézoïdale de la languette latérale 27 de la semelle 6, laquelle languette est guidée dans la rainure de la glissière 5. La languette 27 de la semelle 6 pénètre donc dans l'échancrure 26 des tiges 23. La profondeur de cette échancrure 26 correspond sensiblement au rayon de la tige 23, tandis que sa largeur (suivant l'axe de la tige 23) est légèrement supérieure à l'épaisseur de la languette 27 de la semelle 6.

A leur extrémité opposée à la face 25, les tiges 23 sont chacune prolongée par une chape 28 de section transversale circulaire montée coulissante dans un chambrage cylindrique 29 du perçage 24 du chariot 3. Des rondelles Belleville 30 sont insérées entre la base de la chape 28 et l'épaulement entre le perçage 24 et le chambrage 29. Le fond de la chape 28 est réalisé sous la forme d'une rampe 31 (voir fig. 3). Chaque chape 28 renferme un tronçon 32 de section accrue d'un arbre commun 33 s'étendant parallèlement à la glissière 5 dans le chariot 3. Chaque tronçon 32 présente, dans sa partie tournée vers la rampe 31 de la chape 28, une rampe correspondante 34 et, dans sa partie opposée, une face perpendiculaire à l'axe de la tige 23 et portant contre un bouchon de butée 35 retenu dans le chambrage 29 par un jonc d'arrêt 36.

Sur la fig. 3, on reconnaît que l'arbre 33 est fileté sur son tronçon d'extrémité tourné vers l'une des faces frontales du chariot 3. Sur ce tronçon fileté est vissé l'écrou 22 qui est monté en rotation mais immobilisé axialement par rapport au chariot 3 par plusieurs roulements 37 et un couvercle 38 fixé par des vis 39 au chariot 3.

A son autre extrémité, l'arbre 33 présente un tronçon 40 de section demi-circulaire. Le tronçon 40 porte, sur sa face plane, une languette 41 inclinée par rapport à l'axe de l'arbre 33. La languette 41 se trouve en prise avec une rainure d'inclinaison correspondante ménagée dans la face plane d'un tronçon de section demi-circulaire d'une tige 42 parallèle aux tiges 23. La rampe constituée par la languette 41 est inclinée en sens opposé aux rampes 34 des tronçons 32 de l'arbre 33. La tige 42 est montée coulissante dans un perçage 43 ménagé dans le chariot 3. La languette 27 de la semelle 6 présente également un perçage 44 qui, dans une position de la semelle 6 par rapport au chariot 3, se trouve alignée avec le perçage 43. La longueur de la tige 42 est telle que cette dernière puisse être amenée, par la rampe 41, dans deux positions dans l'une desquelles elle pénètre dans le perçage 44 de la semelle 6 et dans l'autre desquelles elle se trouve retirée du perçage 44 (fig. 3).

On va décrire ci-après un changement d'outil sur l'aléseuse-dresseuse conforme à l'invention.

A la fin d'un cycle d'usinage, le plateau 1 est amené, par la commande numérique de l'aléseuse-dresseuse, dans la position de changement d'outil dans laquelle la semelle porte-outil 6 bridée sur le chariot 3 se trouve alignée avec le dispositif de commande de bridage et de débridage et de transfert 10 du changeur d'outil 7. En même temps, le tambour 8 du changeur d'outil 7 est amené, par la commande numérique de l'aléseuse-dresseuse, dans une position telle qu'une glissière vide définie par deux blocs 12 voisins se trouve alignée avec le dispositif 10.

On fait ensuite avancer le chariot 16 en direction du plateau 1, sous l'action du vérin 15, jusqu'à ce que l'extrémité libre 17b de l'arbre 17a de la visseuse 17 pénètre dans l'écrou 22 du chariot 3. En même temps, on fait avancer, sous l'action du vérin 18, le chariot 19 de manière que la tête de la tige de transfert 20 pénètre et s'épanouit dans le trou borgne 21 de la semelle 6 du chariot 3. Par rotation de la visseuse 17, on fait tourner l'écrou 22 dans le sens de débridage, à savoir de manière que l'arbre 33 s'éloigne de l'écrou 22 et que ses rampes 34 coulissant sur les rampes 31 des tiges 23 poussent ces dernières à l'encontre de la force des ressorts 30. De ce fait, le flanc incliné de l'échancrure 26 des tiges 23 se dégage du flanc incliné correspondant de la languette de guidage 27 de la semelle 6.

En même temps, la rampe 41 de l'arbre 33 fait coulisser la tige 42 de manière à dégager cette dernière du perçage 44 de la languette de guidage 7 de la semelle 6.

Par actionnement du vérin 18 dans le sens opposé, on retire ensuite par la tige de transfert 20 la semelle 6 ainsi débridée du chariot 3 du plateau 1 pour la transférer dans la glissière libre du tambour 8.

Par actionnement du vérin 15, on fait reculer l'ensemble du dispositif de commande de bridage et de débridage et de transfert 10 en commandant la tête de la tige de transfert 20 de manière que cette dernière se dégage du trou borgne 21 de la semelle 6 et, sous l'action de la commande numérique de l'aléseuse-dresseuse, on fait tourner le tambour 8 pour amener en position de changement la semelle 6 portant l'outil destiné à la phase d'usinage suivante.

On fait alors de nouveau avancer en direction du plateau 1 les chariots 16 et 19, sous l'action des vérins 15 et 18, pour engager l'extrémité libre de la tige 18 de la visseuse 17 dans l'écrou 22 et la tête de la tige de transfert 20 dans le trou borgne 21 de la semelle 6, et pour pousser la semelle 6 du tambour 8 dans la glissière 5 du chariot 3.

Dès que la semelle porte-outil 6 se trouve en position de butée sur le chariot 3, on actionne la visseuse 17 dans le sens de bridage pour déplacer l'arbre 33 vers l'écrou 22 et faire coulisser les rampes 34 sur les rampes 31, de sorte que sous l'action des ressorts 30 les tiges 23 se déplacent et que le flanc incliné des échancrures 26 des tiges 23 s'applique contre le flanc incliné de la languette de guidage 27 de la semelle porte-outil 6. En même temps la rampe 41 de l'arbre 33 fait coulisser la tige 42 de manière à faire pénétrer cette dernière dans le perçage 44 de la languette 27 de la semelle 6.

On fait ensuite reculer l'ensemble du dispositif 10 pour retirer la tête de la tige de transfert 20 du trou borgne 21 de la semelle 6 et l'extrémité 17b de l'arbre 17a de la visseuse 17 de l'écrou 22 du chariot 3, jusqu'à ce que l'arbre 17a et la tige de transfert 20 ne gênent plus la rotation du tambour 8.

La commande numérique de la machine-outil assure le déroulement de l'ensemble de l'opération de changement d'outil (mise en position de changement d'outil du plateau 1, indexage du tambour, transfert, bridage, débridage) sans intervention extérieure.

Le bridage proprement dit de la semelle porte-outil 6 sur le chariot 3 s'effectue par la force des rondelles Belleville 30, la tige 42 constituant un moyen de sécurité empêchant la semelle 6 d'être éjectée sous l'effet de la force centrifuge.

Il ressort clairement de la description ci-dessus et du dessin annexé que le changement d'outil entre le chariot 3 du plateau 1 et le tambour 8 dont l'axe est perpendiculaire à l'axe du plateau 1 et coupe l'axe du plateau 1 en position de changement est extrêmement simple puisqu'il implique uniquement un mouvement de translation de la semelle 6, à la manière d'un tiroir, le plateau 1 étant tangentiel au tambour 8. Les moyens mis en oeuvre pour le changement d'outil, y compris le bridage et le débridage, sont, de ce fait, également très simples.

Bien entendu, il serait possible de remplacer certains éléments de la machine-outil et de son changeur d'outil par des éléments équivalents sans sortir pour autant du cadre de la présente invention. Par ailleurs, l'invention est applicable également à des machines-outils autres que des aléseuses-dresseuses comportant un plateau porte-outil tournant, par exemple, autour d'un axe vertical. Il suffirait pour cela de donner au dispositif de commande de bridage et de débridage et de transfert 10 une autre position sur le pourtour du tambour 8.

## Revendications

1. Machine-outil à changement d'outil automatique, notamment aléseuse-dresseuse à commande numérique, comprenant un plateau rotatif (1) et un chariot (3) qui est déplaçable radialement sur ledit plateau (1), ledit chariot étant muni d'une glissière (5) s'étendant dans la direction de déplacement du chariot (3) sur le plateau (1) pour recevoir une semelle porte-outil (6) ayant un profil correspondant à celui de ladite glissière, ainsi que de moyens (22 à 44) de bridage et de débridage de la semelle porte-outil (6) sur le chariot (3), caractérisé par le fait qu'elle comprend, en outre, un changeur d'outil (7) installé à poste fixe à côté de la machine-outil et pourvu d'un tambour rotatif (8) indexable dont l'axe de rotation est perpenduculaire à l'axe de rotation (2) du plateau (1), ledit tambour (8) comportant plusieurs glissières (13) de même profil que la glissière (5) du chariot, s'étendant parallèlement à l'axe de rotation du tambour et réparties sur le pourtour de ce dernier pour recevoir plusieurs semelles porte-outils (6), et de moyens (10) montés sur le changeur d'outil de manière à ne pas participer au mouvement de rotation du tambour (8) et à pouvoir effectuer, par rapport à ce dernier, un mouvement de coulissement parallèlement à l'axe de rotation du tambour pour le transfert des semelles porte-outils (6) du chariot (3) du plateau (1) au tambour (8), et inversement, par coulissement des semelles porte-outils entre le chariot du plateau et le tambour, et inversement, ainsi que pour la commande de bridage et de débridage d'une semelle porte-outil sur le chariot du plateau.

2. Machine-outil suivant la revendication 1, caractérisée par le fait que lesdites glissières (5 et 13) et lesdites semelles porte-outils (6) présentent un profil en queue d'aronde et que lesdits moyens de bridage et de débridage (22 à 44) des semelles porte-outils sur le chariot du plateau comprennent plusieurs tiges (23) réparties sur le chariot (3), d'un côté de la glissière (5) en queue d'aronde de cette dernière, et présentant chacune une échancrure (26) trapézoïdale dont le flanc incliné est serré, sous l'action de ressorts (30), contre le flanc incliné correspondant de la languette de guidage (27) trapézoïdale de la semelle porte-outil en vue du bridage, chacune desdites tiges (23) présentant une rampe (31) en prise avec une rampe (34) correspondante d'un arbre (33) mobile en translation sous l'action des moyens (17, 17a) de commande de bridage et de débridage du changeur d'outil.

3. Machine-outil suivant la revendication 2, caractérisée par le fait que ledit arbre (33) est mobile en translation sous l'action d'un écrou (22) monté en rotation et immobilisé axialement sur le chariot (3), ledit écrou se trouvant en prise avec un tronçon fileté dudit arbre, et que ledit moyen (17, 17a) de commande de bridage et de débridage du changeur d'outil est constitué par une visseuse pour l'entraînement en rotation dudit écrou (22).

4. Machine-outil suivant la revendication 3, caractérisée par le fait que ledit arbre (33) commande en outre, lors de son mouvement de translation, par une rampe (41), une tige (42) montée dans le chariot (3) de manière qu'une extrémité de ladite tige pénètre dans un perçage (44) de la semelle porte-outil (6) en position de bridage et se trouve retirée dudit perçage (44) de la semelle porte-outil (6) en position de débridage.

5. Machine-outil suivant l'une quelconque des revendications précédentes, caractérisée par le fait que ledit moyen de transfert est constitué par une tige (20) mobile en translation axiale et portant à son extrémité libre une tête expansible coopérant avec un trou borgne chambré (21) ménagé à une extrémité frontale dans la semelle porte-outil (6).

## Patentansprüche

1. Werkzeugmaschine mit automatischem Werkzeugwechsel, insbesondere numerisch gesteuerte Ausbohr- und Abrichtmaschine, mit einem drehbaren Auflagetisch (1) und einem auf diesem Auflagetisch radial verschiebbaren Schlitten (3), der eine Führung (5) aufweist, die in Verschiebungsrichtung des Schlittens (3) auf dem Auflagetisch (1) verläuft und die einen Werkzeugspannerschieber (6) aufweisen kann, dessen Profil demjenigen der genannten Führung entspricht, sowie mit Einrichtungen (22 bis 44) zum Anflanschen und Abnehmen des Werkzeugspannerschiebers (6) an den bzw. von dem Schlitten (3), dadurch gekennzeichnet, daß außerdem ein Werkzeugwechsler (7) vorgesehen ist, der feststehend neben der Werkzeugmaschine angebracht und mit einer weiterschaltbaren Drehtrommel (8) ausgestattet ist, deren Drehachse senkrecht zu der Drehachse (2) des Auflagetischs (1) verläuft, und daß die genannte Trommel (8) mehrere Führungen (13) mit gleichem Profil wie die Führung (5) des Schlittens besitzt, die parallel zu der Drehachse der Trommel verlaufen und über deren äußeren Umfang verteilt angeordnet sind, um mehrere Werkzeugspannerschieber (6) aufnehmen zu können, sowie eine Einrichtung (10), die an dem Werkzeugwechsler in der Weise angebracht ist, daß sie nicht an der Drehbewegung der Trommel (8) teilnimmt, und die gegenüber der Trommel parallel zu deren Drehachse eine Schiebebewegung für die Überführung der Werkzeugspannerschieber (6) von dem Schlitten (3) des Auflagetischs (1) zur Trommel (8) und umgekehrt durch Verschieben der Werkzeugspannerschieber zwischen dem Schlitten des Auflagetischs und der Trommel und umgekehrt sowie für die Vorgänge des Anflanschens und Abnehmens eines Werkzeugspannerschiebers an den bzw. von dem Schlitten des Auflagetischs ausführt.

2. Werkzeugmaschine nach Anspruch 1, dadurch gekennzeichnet, daß die genannten Führungen (5 und 13) und die genannten Werkzeugspannerschieber (6) ein Schwalbenschwanzprofil besitzen und daß die genannten Einrichtung (22 bis 44) zum Anflanschen bzw. Abnehmen der Werkzeugspannerschieber an den bzw. von dem Schlitten des Auflagetischs mehrere längs des Schlittens (3) verteilte Stangen (23) auf der einen Seite der Schwalbenschwanzführung (5) aufweist, die jeweils einen trapezförmigen Ausschnitt (26) besitzen, dessen geneigte Flanke unter der Wirkung von Federn (30) zum Anflanschen gegen die zugeordnete Flanke der trapezförmigen Führungszunge (27) des Werkezugspannerschiebers gedrückt wird, und daß jede dieser Stangen (23) eine Schrägfläche (31) aufweist, die sich an einer zugeordneten Schrägfläche (34) einer Welle (33) abstützt, die unter der Wirkung der Betätigungseinrichtung (17, 17a) des Werkzeugwechslers eine Translationsbewegung für das Anflanschen und Abnehmen ausführt.

3. Werkzeugmaschine nach Anspruch 2, dadurch gekennzeichnet, daß die genannte Welle (33) die Translationsbewegung unter der Wirkung einer Mutter (22) ausführt, die drehbeweglich und axial unbeweglich an dem Schlitten (3) angebracht ist, daß die genannte Mutter mit einem Gewindestück der genannten Welle in Eingriff steht, und daß die genannte Betätigungseinrichtung (17, 17a) des Werkzeugwechslers zum Anflanschen und Abnehmen als Mischinenschrauber ausgebildet ist, der die genannte Mutter (22) in Drehung versetzt.

4. Werkzeugmaschine nach Anspruch 3, dadurch gekennzeichnet, daß die genannte Welle (33) bei ihrer Translationsbewegung außerdem über eine Schrägfläche (41) eine Stange (42) antreibt, die in dem Schlitten (3) in der Weise angebracht ist, daß ein Ende der genannten Stange in Anflanschposition in eine Bohrung (44) des Werkzeugspannerschiebers (6) eindringt und in Abnahmeposition aus der genannten Bohrung (44) des Werkzeugspannerschiebers (6) zurückgenommen ist.

5. Werkzeugmaschine nach einem der vorhergehenden Ansprüche, dadurch gekennzeichnet, daß die genannte Überführungseinrichtung aus einer Stange (20) besteht, die eine Translationsbewegung in axialer Richtung ausführt und an ihrem freien Ende einen erweiterbaren Kopf trägt, der mit einem tiefen Sackloch (21) zusammenwirkt, das an einer Stirnseite in dem Werkezugspannerschieber (6) ausgespart ist.

## Claims

1. A machine tool with automatic tool change, notably a numerically controlled boring and facing machine, comprising a rotary plate (1) and a slide (3) which can move radially over the said plate (1), the said slide being designed with a slideway (5) running in the direction of movement of the slide (3) on the plate (1) for receiving a toolholder block (6) having a section corresponding to the section of the said slideway, and further means (22 to 44) for clamping and unclamping the toolholder block (6) on the slide (3), characterized in that it also comprises a tool changer (7) installed in a fixed position on the side of the machine tool and fitted with an indexable rotary drum (8) the axis of rotation of which is perpendicular to the axis of rotation (2) of the plate (1), with the said drum (8) comprising several slideways (13), having the same section as the slide slideway (5), running parallel to the axis of rotation of the drum and distributed round the peripery of this drum for receiving several toolholder blocks (6), and means (10) mounted on the tool changer so as not to take part in the rotational movement of the drum (8) and so as to slide, with respect to this drum, parallel to the rotational axis of the drum for transferring toolholder blocks (6) from the slide (3) of the plate (1) to the drum (8), and vice versa, by sliding the toolholder blocks between the plate slide and the drum, and vice versa, as well as for controlling the clamping and unclamping of a toolholder block on the plate slide.

2. The machine tool according to claim 1, characterized in that the said slideways (5 and 13) and the said toolholder blocks (6) have a dovetail cross-section and in that the said means for clamping and unclamping (22 to 44) the toolholder blocks on the plate slide comprise several pins (23) spaced along the slide (3) on one side of the dovetail slideway (5) of this slide, each having a trapezoidal notch (26) the inclined face of which is pressed, by springs (30), against the corresponding inclined face of the trapezoidal guide tongue (27) on the toolholder block to produce clamping, with each of the said pins (23) having a ramp (31) engaging with a corresponding ramp (34) on a shaft (33) which can move translationally under the action of the means (17, 17a) controlling the clamping and unclamping of the tool changer.

3. The machine tool according to claim 2, characterized in that the said shaft (33) can be moved in translation by the action of a nut (22) mounted in rotation and fixed axially onto the slide (3), the said nut engaging with a threaded section of the said shaft, and in that the said means (17, 17a) for controlling clamping and unclamping of the tool changer consists of a screwing device for driving the said nut (22) in rotation.

4. The machine tool according to claim 3, characterized in that the said shaft (33), when it moves in translation, also controls, by a ramp (41), a pin (42) mounted in the slide (3) so that one end of the said pin enters a hole (44) in the toolholder block (6) in the clamped position and is withdrawn from the said hole (44) in the toolholder block (6) in the unclamped position.

5. The machine tool according to any of the preceding claims, characterized in that the said transfer means consists of a rod (20) which can be moved in axial translation and carries on its free end an expandable head engaging with a recessed blind hole (21) made in the toolholder block (6) at one frontal end thereof.

# FIG.1

FIG.2

0 023 351

FIG.3

# FIG.4